# EUROPÄISCHE PATENTANMELDUNG

(11) **EP 2 135 874 A1**
(43) Veröffentlichungstag der Anmeldung: **23.12.2009**
(21) Anmeldenummer: 09163051.7
(22) Anmeldetag: 18.06.2009
(51) Int. Cl.: C07F 7/08, C08G 77/12, C08G 77/46

(54) **Verfahren zur Hydrosilylierung**

(30) Priorität: 20.06.2008 DE 102008002552
(71) Anmelder: Wacker Chemie AG, 81737 München (DE)
(72) Erfinder: Geisberger, Gilbert, 84503 Altötting (DE)
(74) Vertreter: Gössmann, Christoph Tassilo

(57) **Zusammenfassung**

Verfahren zur Hydrosilylierung von Kohlenstoff-Kohlenstoff-Doppel- bzw. Kohlenstoff-Kohlenstoff-Dreifachbindungen enthaltenden Verbindungen (F) mit Diorganosiloxy-Einheiten und Si-H Gruppen aufweisenden linearen Organopolysiloxanen (Q), die hergestellt werden, in dem in einem ersten Schritt Diorganodichlorsilane (A) und Monochlorsilane (B) und gegebenenfalls Dichlorsilane (C), wobei mindestens die Monochlorsilane (B) oder Dichlorsilane (C) Si-H Gruppen enthalten, mit Wasser zu einem Teilhydrolysat (T) und gasförmigem Chlorwasserstoff umgesetzt werden und in einem zweiten Schritt das Teilhydrolysat (T) zur Entfernung der noch vorhandenen Sicl-Gruppen mit Wasser unter Bildung von Salzsäure behandelt wird, wobei ein die Organopolysiloxane (Q) enthaltendes Hydrolysat (H) anfällt.

## Beschreibung

Gegenstand der Erfindung ist ein Verfahren zur Hydrosilylierung von Kohlenstoff-Kohlenstoff-Doppel- bzw. Kohlenstoff-Kohlenstoff-Dreifachbindungen enthaltenden Verbindungen (F) mit Diorganosiloxy-Einheiten und Si-H Gruppen aufweisenden linearen Organopolysiloxanen (Q), die in einem Cohydrolyse-Verfahren hergestellt werden.

Stand der Technik ist die Hydrosilylierung von (F) mit Diorganosiloxy-Einheiten und Si-H Gruppen aufweisende linearen Organopolysiloxanen (Q) die bisher über Äquilibrierverfahren (z.B. EP 797612) hergestellt wurden. Die nachfolgende Hydrosilylierung dieser "H-Äquilibrate" erfordert viel Platinkatalysator, bzw. lange Reaktionszeiten oder hohen Reaktionstemperaturen sind erforderlich. Zusätzlich tritt eine erhebliche Produktfärbung auf.

Aufgabe der Erfindung ist es den Stand der Technik zu verbessern und insbesondere ein kostengünstiges Verfahren zur Verfügung zu stellen, bei dem eine geringere Konzentration an Platin-Katalysatoren notwendig ist, geringere Produktfärbung auftritt und kürzere Reaktionszeiten oder niedrige Reaktionstemperaturen notwendig sind.

Gegenstand der Erfindung ist ein Verfahren zur Hydrosilylierung von Kohlenstoff-Kohlenstoff-Doppel- bzw. Kohlenstoff-Kohlenstoff-Dreifachbindungen enthaltenden Verbindungen (F) mit Diorganosiloxy-Einheiten und Si-H Gruppen aufweisenden linearen Organopolysiloxanen (Q), die hergestellt werden, in dem in einem ersten Schritt Diorganodichlorsilane (A) und Monochlorsilane (B) und gegebenenfalls Dichlorsilane (C), wobei mindestens die Monochlorsilane (B) oder Dichlorsilane (C) Si-H Gruppen enthalten, mit Wasser zu einem Teilhydrolysat (T) und gasförmigem Chlorwasserstoff umgesetzt werden und in einem zweiten Schritt das Teilhydrolysat (T) zur Entfernung der noch vorhandenen SiCl-Gruppen mit Wasser unter Bildung von Salzsäure behandelt wird, wobei ein die Organopolysiloxane (Q) enthaltendes Hydrolysat (H) anfällt.

Bei dem Verfahren werden direkt aus den Chlorsilanen die Organopolysiloxane (Q) hergestellt. Die bisher notwendige zusätzliche Verfahrensstufe, die Äquilibrierung von mindestens zwei unterschiedlichen Organopolysiloxanen entfällt.

Das Verfahren ist leicht zu steuern, da die Wasserstoffabspaltung unterdrückt wird. Die Organopolysiloxane (Q) neigen auch nicht zu Vergelungen. Ferner wird ein hoher Anteil des Chlors der Ausgangsstoffe als HCl-Gas gewonnen.

Das hydrolysierbare Chlor liegt in Form von SiCl-Gruppen vor. Vorzugsweise werden im ersten Schritt vorzugsweise höchstens 0,7 mol, bevorzugt 0,3 mol bis 0,5 mol, besonders bevorzugt 0,4 mol bis 0,5 mol Wasser je Mol hydrolysierbaren Chlors eingesetzt.

Die Diorganosiloxy-Einheiten und Si-H Gruppen aufweisenden linearen Organopolysiloxane (Q) weisen vorzugsweise die allgemeine Formel 1

R₃SiO(SiR₂O)ₘ(SiR¹₂O)ₙSiR₃ (1),

auf, in der
- **R**: Wasserstoff oder einen gegebenenfalls mit Halogen- oder Cyanoresten substituierten Kohlenwasserstoffrest mit 1 bis 18 Kohlenstoffatomen,
- **R¹**: einen gegebenenfalls mit Halogen- oder Cyanoresten substituierten Kohlenwasserstoffrest mit 1 bis 18 Kohlenstoffatomen,
- **m**: ganzzahlige Werte von 0 bis 1000 und
- **n**: ganzzahlige Werte von 1 bis 1000 bedeuten,
mit der Maßgabe, dass mindestens ein Rest **R** Wasserstoff bedeutet.

Die im ersten Schritt eingesetzten Diorganodichlorsilane (A) weisen vorzugsweise die allgemeine Formel 2

R¹₂SiCl₂ (2),

auf, in der **R¹** die vorstehenden Bedeutungen aufweist.

Die im ersten Schritt eingesetzten Monochlorsilane (B) weisen vorzugsweise die allgemeine Formel 3

R₃SiCl (3),

auf, in der **R** die vorstehenden Bedeutungen aufweist.

Die im ersten Schritt eingesetzten Dichlorsilane (C) weisen vorzugsweise die allgemeine Formel 4

R₂SiCl₂ (4),

auf, in der **R** die vorstehenden Bedeutungen aufweist.

Vorzugsweise bedeuten die Kohlenwasserstoffe **R** und **R¹** einen von ethylenisch oder acetylenisch ungesättigten Bindungen freien Kohlenwasserstoffrest mit 1 bis 18 Kohlenstoffatomen.

Beispiele für Kohlenwasserstoffreste **R** und **R¹** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest;

Beispiele für substituierte Kohlenwasserstoffreste **R** und **R¹** sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Bevorzugt handelt es sich bei den Resten **R** und **R¹** um einen Phenylrest oder linearen Alkylrest, insbesondere mit 1 bis 10, besonders 1 bis 6 Kohlenstoffatomen. Besonders bevorzugte Kohlenwasserstoffreste **R** und **R¹** sind n-Propyl-, Ethyl- und insbesondere Methylrest.

Vorzugsweise bedeutet **m** Werte von höchstens 200, insbesondere höchstens 50. Vorzugsweise bedeutet **n** Werte von höchstens 500, insbesondere höchstens 25.

Bevorzugte im ersten Schritt eingesetzte Gemische sind
(Methyl=Me):
Me₃SiCl/Me₂SiCl₂/MeSiHCl₂
Me₃SiCl/PropylMeSiCl₂/MeSiHCl₂
Me₃SiCl/Me₂SiCl₂/PhenylMeSiCl₂/MeSiHCl₂
Me₂SiHCl/Me₂SiCl₂
Me₂SiHCl/Me₂SiCl₂/MeSiHCl₂
Besonders bevorzugt ist: Me₃SiCl/Me₂SiCl₂/MeSiHCl₂

Das erfindungsgemäße Verfahren ist hervorragend geeignet zur Herstellung von schwerflüchtigen Organopolysiloxanen (Q), Polydimethylsiloxan mit Me₂HSi-Endgruppen oder SiH-haltigen Polysiloxanen mit Trimethylsilyl-Endgruppen. Vorzugsweise weisen die Organopolysiloxane (Q) eine Viskosität von 1 bis 1200 mPas bei 25 °C auf.

Bei dem erfindungsgemäßen Verfahren zur Hydrosilylierung werden Kohlenstoff-Kohlenstoff-Doppel- bzw. Kohlenstoff-Kohlenstoff-Dreifachbindungen enthaltenden Verbindungen (F) mit Diorganosiloxy-Einheiten und Si-H Gruppen aufweisenden linearen Organopolysiloxanen (Q) hydrosilyliert.

Bei der erfindungsgemäß eingesetzten Verbindung (F) kann es sich um siliciumfreie organische Verbindungen mit aliphatisch ungesättigten Gruppen sowie um Organosiliciumverbindungen mit aliphatisch ungesättigten Gruppen handeln.

Beispiele für organische Verbindungen, die im erfindungsgemäßen Verfahren als Komponente (F) eingesetzt werden können, sind alle Arten von Olefinen, wie 1-Alkene, 1-Alkine, Vinyl-cyclo-hexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Cyclopenten, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallyl-benzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinylhexadien-(1,5) und 4,5-Dimethyl-4,5-diethyl-octadien-(1,7), Diallylether, Di-allylamin, Diallylcarbonat, N,N'-Diallylharnstoff, Triallyl-amin, Tris(2-methylallyl)amin, 2,4,6-Triallyloxy-1,3,5-triazin, Triallyl-s-triazin-2,4,6(1H,3H,5H)-trion, Diallylmalonsäureester, Allylalkohole, Allylglykole, Allylglycidether und Allylbernsteinsäureanhydrid.

Prinzipiell ist das erfindungsgemäße Verfahren auch zur Umsetzung von Acrylaten, wie beispielsweise N,N'-Methylen-bis-(acrylsäureamid), 1,1,1-Tris(hydroxymethyl)-propan-triacrylat, 1,1,1-Tris(hydroxymethyl)-propan-trimethacrylat, Tripropylenglykol-diacrylat, Polyethylenglykol Diacrylat, Polyethylenglykol Dimethacrylat oder Poly-(propylenglykol)methacrylat, geeignet.

Des weiteren können bei dem erfindungsgemäßen Verfahren als Bestandteil (F) aliphatisch ungesättigte Organosiliciumverbindungen eingesetzt werden.

Falls als Bestandteil (F) Organosiliciumverbindungen eingesetzt werden, die SiC-gebundene Reste mit aliphatischen Kohlenstoff-Kohlenstoff-Mehrfachbindungen aufweisen, handelt es sich vorzugsweise um solche aus Einheiten der Formel

R²ₐR³_{b}SiO_{(4-a-b)/2} (I)

worin
- **R²**: gleich oder verschieden sein kann und einen von aliphatischen Kohlenstoff-Kohlenstoff-Mehrfachbindungen freien, organischen Rest bedeutet,
- **R³**: gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
- **a**: 0, 1, 2 oder 3 ist und
- **b**: 0, 1 oder 2 ist
mit der Maßgabe, dass die Summe a + b ≤ 4 ist.

Bei den erfindungsgemäß eingesetzten Organosiliciumverbindungen (F) kann es sich sowohl um Silane handeln, d.h. Verbindungen der Formel (I) mit a + b = 4, als auch um Siloxane, d.h. Verbindungen enthaltend Einheiten der Formel (I) mit a + b < 3.

Rest **R²** umfasst die einwertigen Reste -F, -Cl, -Br, -CN, -SCN, -NCO, Alkoxyreste und SiC-gebundene, gegebenenfalls substituierte Kohlenwasserstoffreste, die mit Sauerstoffatomen oder der Gruppe -C(O)- unterbrochen sein können.

Beispiele für Reste **R²** sind Alkylreste, wie beispielsweise der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie beispielsweise der n-Hexylrest, Heptylreste, wie beispielsweise der n-Heptylrest, Octylreste, wie beispielsweise der n-Octylrest und iso-Octylreste, wie beispielsweise der 2,2,4-Trimethylpentylrest, Nonylreste, wie beispielsweise der n-Nonylrest, Decylreste, wie beispielsweise der n-Decylrest, Dodecylreste, wie beispielsweise der n-Dodecylrest, und Octadecylreste, wie beispielsweise der n-Octadecylrest, Cycloalkylreste, wie beispielsweise Cyclopentyl-, Cyclohexyl-, Cycloheptyl- und Methyl-cyclohexylreste, Arylreste, wie beispielsweise der Phenyl-, Naphthyl-, Anthryl- und Phenanthrylrest, Alkarylreste, wie beispielsweise o-, m-, p-Tolylreste, Xylylreste und Ethylphenylreste, und Aralkylreste, wie beispielsweise der Benzylrest, der α- und der β-Phenylethylrest.

Beispiele für substituierte Reste **R²** sind Halogenalkylreste, wie der 3,3,3-Trifluor-n-propylrest, der 2,2,2,2',2',2'-Hexafluorisopropylrest und der Heptafluorisopropylrest, sowie Halogenarylreste, wie der o-, m- und p-Chlorphenylrest.

Bevorzugt handelt es sich bei Rest **R²** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest **R³** kann es sich um beliebige, einer Anlagerungsreaktion (Hydrosilylierung) mit einer SiHfunktionellen Verbindung zugängliche Gruppen handeln.

Falls es sich bei Rest **R³** um SiC-gebundene, substituierte Kohlenwasserstoffreste handelt, sind als Substituenten Halogenatome, Cyanoreste, Alkoxygruppen und Siloxygruppen bevorzugt.

Bevorzugt handelt es sich bei Rest **R³** um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Bevorzugt als Komponente (F) sind alle endständigen Olefine und alle allylhaltigen, vinylhaltigen und alkinhaltigen Systeme, wobei allylhaltige Systeme besonders bevorzugt sind.

Als Organosiliciumverbindung (Q) werden die oben beschriebenen Diorganosiloxy-Einheiten und Si-H Gruppen aufweisenden linearen Organopolysiloxanen (Q) eingesetzt.

Vorzugsweise enthält die erfindungsgemäß eingesetzte Organosiliciumverbindung (Q) Si-gebundenen Wasserstoff im Bereich von 0,02 bis 1,7 Gewichtsprozent, bezogen auf das Gesamtgewicht der Organosiliciumverbindung (Q).

Das Molekulargewicht des Bestandteils (Q) im Falle von Siloxan kann in weiten Grenzen variieren, etwa zwischen 10² und 10⁶ g/mol. So kann es sich bei dem Bestandteil (Q) beispielsweise um ein relativ niedermolekulares SiHfunktionelles Oligosiloxan handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (Q) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein.

Bei dem erfindungsgemäßen Verfahren wird Bestandteil (Q) vorzugsweise in einer solchen Menge eingesetzt, dass das Molverhältnis von aliphatisch ungesättigten Gruppen des Bestandteils (F) zu SiH-Gruppen des Bestandteils (Q) zwischen 0,1 und 20 und bei Siloxanen bevorzugt zwischen 1,0 und 5,0, liegt.

Bei dem erfindungsgemäßen Verfahren können als Komponente (G) alle Katalysatoren eingesetzt werden, die auch bisher zur Addition von Si-gebundenen Wasserstoff an aliphatisch ungesättigte Verbindungen eingesetzt wurden. Beispiele für solche Katalysatoren sind Verbindungen oder Komplexe der Gruppe der Edelmetalle enthaltend Platin, Ruthenium, Iridium, Rhodium und Palladium, wie beispielsweise Platinhalogenide, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆·6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenen Halogen, Bis-(γ-picolin)-platindichlorid, Trimethylendipyridinplatindichlorid, Dicyclopentadienplatindichlorid, Dimethylsulfoxidethylenplatin-(II)-dichlorid sowie Umsetzungsprodukte von Platintetrachlorid mit Olefin und primärem Amin oder sekundärem Amin oder primärem und sekundärem Amin, wie beispielsweise das Umsetzungsprodukt aus in 1-Octen gelöstem Platintetrachlorid mit sec.-Butylamin. In einer weiterhin bevorzugten Ausführungsform des erfindungsgemäßen Verfahrens werden Komplexe des Iridiums mit Cyclooctadiene, wie beispielsweise µ-Dichloro-bis(cyclooctadiene)-diiridium(I), verwendet.

Vorzugsweise handelt es sich bei dem Katalysator (G) um Verbindungen oder Komplexe des Platins, bevorzugt um Platinchloride und Platinkomplexe, insbesondere um Platin-Olefin-Komplexe und besonders bevorzugt um Platin-Divinyltetramethyldisiloxankomplexe.

Bei dem erfindungsgemäßen Verfahren wird Katalysator (G) in Mengen von 1 bis 50 Gewichts-ppm, berechnet als elementares Edelmetall und bezogen auf das Gesamtgewicht der in den Massen vorliegenden Komponente (F) und (Q), eingesetzt. Bevorzugt werden 2 bis 10 Gewichts-ppm eingesetzt.

Besonders bevorzugt werden in Glycolen bzw. Polyolen lösliche Komplexe eingesetzt, besonders bevorzugt sind Platin-Komplexe wie H₂PtCl₆ und PtCl₄. In dem Glykol und/oder Polyol ist der Katalysator vorzugsweise in Mengen von 0,1 bis 50 Gew.% bevorzugt in Mengen von 0,5 bis 20 Gew.% und besonders bevorzugt in Mengen von 1% bis 5 Gew.% enthalten. Durch Filtrieren kann die bei der Reaktion ausgefallene Platin-Verbindung zurückgewonnen und aufbereitet werden.

Das erfindungsgemäße Verfahren kann in Anwesenheit oder Abwesenheit von organischem Lösungsmittel (H) durchgeführt werden.

Beispiele für organische Lösungsmittel (H) sind alle Lösungsmittel, die auch bisher bei Hydrosilylierungsreaktionen eingesetzt werden konnten, wie Toluol, Xylol, Isopropanol, Aceton, Isophoron und Glykole.

Falls organische Lösungsmittel (H) eingesetzt werden, handelt es sich bevorzugt um Toluol, Isopropanol und Glykole sowie besonders bevorzugt um Toluol.

Falls beim erfindungsgemäßen Verfahren organische Lösungsmittel (H) eingesetzt werden, handelt es sich um Mengen von bevorzugt 5 bis 60 Gewichts-%, besonders bevorzugt 5 bis 40 Gewichts-%, jeweils bezogen auf das Gesamtgewicht der Reaktionsmischung.

Bei dem erfindungsgemäßen Verfahren können noch alle weiteren Stoffe (I) eingesetzt werden, die auch bisher bei Hydrosilylierungsreaktionen eingesetzt wurden.

Vorzugsweise werden bei dem erfindungsgemäßen Verfahren zusätzlich zu Komponenten (Q),(F) bis (I) keine weiteren Stoffe eingesetzt.

Bei den erfindungsgemäß eingesetzten Komponenten (Q) und (F) bis (I) kann es sich jeweils um eine einzelne Art einer solchen Komponente, wie auch um ein Gemisch aus mindestens zwei verschiedenen Arten einer solchen Komponente handeln.

Bei dem erfindungsgemäßen Verfahren können die eingesetzten Komponenten nach beliebigen und bekannten Verfahren miteinander vermischt werden. Vorzugsweise werden bei dem erfindungsgemäßen Verfahren entweder alle Reagentien bis auf Katalysator (G) vorgelegt und anschließend die Umsetzung durch Katalysatorzugabe gestartet oder es werden alle Reagentien bis auf die Si-H-haltigen Verbindungen (Q) vorgelegt und die Si-H-haltigen Verbindungen anschließend zudosiert.

Das erfindungsgemäße Verfahren kann kontinuierlich oder diskontinuierlich durchgeführt werden.

Bei dem erfindungsgemäßen Verfahren kann die Anlagerung von Si-gebundenem Wasserstoff an aliphatische Mehrfachbindung unter den gleichen Bedingungen erfolgen, wie in den bisher bekannten Hydrosilylierungsreaktionen. Vorzugsweise handelt es sich dabei um Temperaturen von 20 bis 200°C, besonders bevorzugt von 60 bis 140°C, und einem Druck von 1 bis 20 bar. Es können aber auch höhere oder niedrigere Temperaturen und Drücke angewendet werden.

Die bei dem erfindungsgemäßen Verfahren hergestellten Organosiliciumverbindungen können für alle Zwecke eingesetzt werden, für die auch bisher modifizierte Organosiliciumverbindungen verwendet wurden.

Das erfindungsgemäße Verfahren hat den Vorteil, dass eine deutliche Katalysatorreduktion erreicht werden kann, da die katalytische Aktivität des ursprünglichen Katalysators deutlich erhöht und verlängert werden kann.

Des weiteren hat das erfindungsgemäße Verfahren den Vorteil, dass die Farbqualität verbessert wird (niedrigere Hazen-Farbzahl) und geringeren Anteil an toxischen Schwermetallen im Hydrosilylierungsprodukt insbesondere bei Polysiloxanen. Ein weiterer Vorteil sind kürzere Reaktionszeiten oder niedrige Reaktionstemperaturen.

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

Um den Vorteil des neuen Verfahrens aufzuzeigen, sind in den Beispielen Hydrosilylierungen mit über ein herkömmliches Äquilibrierverfahren (Beispiel 1 und Beispiel 3) und über Cohydrolyseverfahren (Beispiel 2 und Beispiel 4) hergestellte Polyhydrogensiloxane Q beschrieben.

### Nicht erfindungsgemäße Vergleichsbeispiele:

Polyhydrogensiloxan Q1 wird durch Äquilibrierung von trimethylsilylendständigem Polymethylhydrogensiloxans und trimethylsilylendständigem Polydimethylsiloxans unter sauren Katalysebedingungen mit Phosphornitrilchlorid analog dem in EP 797612, Beispiel 5 beschriebenen Verfahren hergestellt.

### Erfindungsgemäße Beispiele:

Polyhydrogensiloxan Q2 wird wie folgt hergestellt.

In den Loop-Reaktor (1) werden 92 kg/h Methyldichlorsilan, 98 kg/h Dimethyldichlorsilan und 5,0 kg/h Trimethylchlorsilan über Leitung (5), 60 1/h Destillat des Dünnschichtverdampfers (4) (enthält 30 Gew.-% niedrigmolekulare Hydrogenmethylsiloxane und 70 Gew.-% Toluol) über Leitung (12) und Salzsäure aus Abscheider (3) über Leitung (10) bei 30°C eingespeist. Der anfallende Chlorwasserstoff wird gasförmig aus dem Reaktor abgezogen. Das aus dem Loop-Reaktor (1) austretende Teilhydrolysat wird als homogene Phase über Leitung (7) in den Loop-Reaktor (2) geführt und dort mit 29 kg/h Wasser vermischt.

Das aus dem Loop-Reaktor (2) austretende Reaktionsgemisch wird über Leitung (9) in den Abscheider (3) eingespeist. Dort wird in die obere, organische Hydrolysatphase und die untere wäßrige Phase, die einer ca. 6 Gew.-%igen Salzsäure entspricht, getrennt. Die untere Phase wird über Leitung (10) in den Loop-Reaktor (1) zurückgeführt. Die organische Hydrolysatphase wird über zwei Destillationsstufen in der Anlage (4) bei bis zu 160°C und 1 mbar (absolut) ausgeheizt. Der in der zweiten Destillationsstufe (14) anfallende Destillatstrom (15) wird vollständig in den Umlagerungsreaktor (16), der als von unten angeströmter Wirbelschichtreaktor mit einer Katalysatorschüttung eines sulfonierten Polystyrolharzes ausgeführt ist, eingespeist. Die Umlagerungsreaktion wird bei 20°C und einem Absolutdruck von 1100 hPa durchgeführt.

Das equilibrierte umgelagerte DSV-Kondensat (17) wird wieder in den Destillationsteil der Anlage (4) zurückgespeist.
Der Ablauf (18) enthält lineares Trimethylsilyl-terminiertes Hydrogenmethylpolysiloxan mit Dimethylsilyl-Gruppen Q2.

Q1 und Q2 weisen jeweils eine Viskosität von 60 mPas und einen Wasserstoffgehalt von 0,73 Gew.% auf und entsprechen der durchschnittlichen Formel Me₃SiO(SiHMeO)₂₉(SiMe₂O)₂₉SiMe₃.

### Beispiel 1 (nicht erfindungsgemäß):

134 g Polyhydrogensiloxan Q1 und 0,135 ml der Platin-Katalysatorlösung G1 (1% ige Lösung von Hexachlorplatinsäure in Isopropanol) wurden in einem Dreihalskolben vorgelegt und auf 105 °C aufgeheizt. 134 g 1-Octen wurden kontinuierlich zudosiert, so dass bei der exothermen Reaktion eine Reaktionstemperatur von 140°C nicht überschritten wurde. Die Dosierdauer betrug 40 Minuten. Die Reaktionsmischung wurde weitere zwei Stunden bei 140°C gerührt und anschließend auf Raumtemperatur abgekühlt. Als Maß für den Reaktionsfortschritt wurde die Wasserstoffzahl bestimmt. Die Wasserstoffzahl betrug 31 (Sollwert < 10).

### Beispiel 2 (erfindungsgemäß):

Vorhergehendes Beispiel wurde wiederholt, indem anstelle Q1 das über Cohydrolyse-Verfahren hergestellte Polyhydrogensiloxan Q2 eingesetzt wurde. Die Wasserstoffzahl betrug 8,2 (Soll: < 10). Nach dem Abdestillieren der flüchtigen Bestandteile bei 140°C/Vakuum < 1 mbar und Filtration wurde ein hellbeiges Alkyl-funktionelles Siliconöl erhalten mit folgenden Eigenschaften: Farbzahl Hazen (DIN ISO 6271): 85; Viskosität 1110 mPas.

### Beispiel 3 (nicht erfindungsgemäß):

Beispiel 1 wurde wiederholt, indem anstelle G1 0,215 ml der Platin-Katalysatorlösung G2 (3%ige Lösung von Hexachlorplatinsäure in 1,2-Propandiol) eingesetzt wurde. Es wurde nur eine geringe exotherme Reaktion beobachtet. Die Wasserstoffzahl lag bei 183 (Sollwert < 10).

### Beispiel 4 (erfindungsgemäß):

Vorhergehendes Beispiel wurde wiederholt, indem anstelle Q1 das über Cohydrolyse-Verfahren hergestellte Polyhydrogensiloxan Q2 eingesetzt wurde. Es wurde eine stark exotherme Reaktion beobachtet. Die Wasserstoffzahl betrug 7,8 (Soll: < 10). Nach dem Abdestillieren der flüchtigen Bestandteile bei 140°C/Vakuum < 1 mbar und Abfiltration der ausgefallenen Platin-Verbindung wurde ein farbloses Alkyl-funktionelles Siliconöl erhalten mit folgenden Eigenschaften: Farbzahl Hazen (DIN ISO 6271): 8; Viskosität 1296 mPas.

**Tabelle 1:**

| Polyhydrogensiloxan Platin-Kat. -Lösung Wasserstoffzahl | | | | |
|---|---|---|---|---|
| Beispiel 1 | (nicht erf.) | Q1 | G1 | 31 |
| Beispiel 2 | | Q2 | G1 | 8,1 |
| Beispiel 3 | (nicht erf.) | Q1 | G2 | 183 |
| Beispiel 4 | | Q2 | G2 | 7,8 |

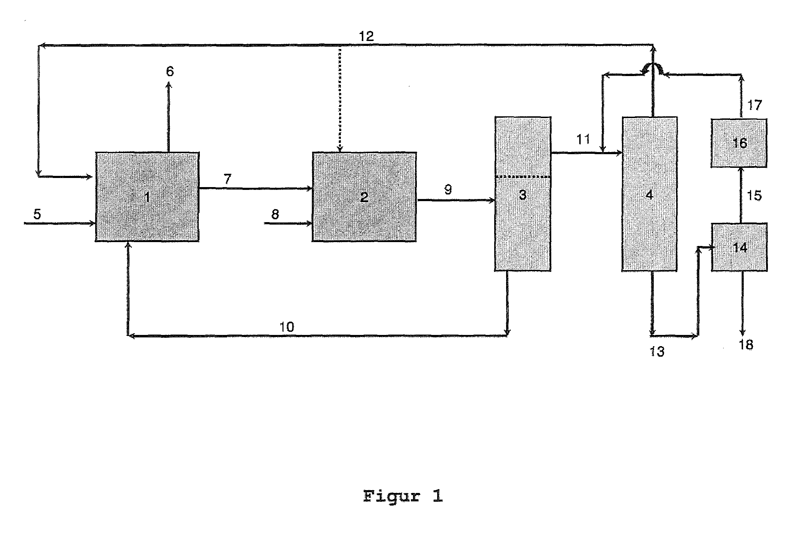

## Patentansprüche

1. Verfahren zur Hydrosilylierung von Kohlenstoff-Kohlenstoff-Doppel- bzw. Kohlenstoff-Kohlenstoff-Dreifachbindungen enthaltenden Verbindungen (F) mit Diorganosiloxy-Einheiten und Si-H Gruppen aufweisenden linearen Organopolysiloxanen (Q), die hergestellt werden, in dem in einem ersten Schritt Diorganodichlorsilane (A) und Monochlorsilane (B) und gegebenenfalls Dichlorsilane (C), wobei mindestens die Monochlorsilane (B) oder Dichlorsilane (C) Si-H Gruppen enthalten, mit Wasser zu einem Teilhydrolysat (T) und gasförmigem Chlorwasserstoff umgesetzt werden und
in einem zweiten Schritt das Teilhydrolysat (T) zur Entfernung der noch vorhandenen SiCl-Gruppen mit Wasser unter Bildung von Salzsäure behandelt wird, wobei ein die Organopolysiloxane (Q) enthaltendes Hydrolysat (H) anfällt.

2. Verfahren nach Anspruch 1, **dadurch gekennzeichnet, dass** höchstens 0,7 mol Wasser je Mol hydrolysierbaren Chlors eingesetzt werden.

3. Verfahren nach Anspruch 1, **dadurch gekennzeichnet, dass** die Hydrosilylierung mittels Verbindungen oder Komplexen des Platins als Katalysator (C) durchgeführt wird.
